# EUROPEAN PATENT APPLICATION

(11) **EP 1 669 791 A1**
(43) Date of publication of application: **14.06.2006**
(21) Application number: 05027006.5
(22) Date of filing: 09.12.2005
(51) Int. Cl.: G02B 26/10

(54) **Light beam deflector**

(30) Priority: 10.12.2004 JP 2004358917
(71) Applicant: FUJI PHOTO FILM CO., LTD., Minami-Ashigara-shi, Kanagawa (JP)
(72) Inventor: Miyagawa, Ichirou, Ashigarakami-gun Kanagawa (JP)
(74) Representative: Klunker . Schmitt-Nilson . Hirsch

(57) **Abstract**

A light beam deflector for recording an image at a recording medium, at which a light beam modulated in accordance with image information passes through an incidence face of a cubic prism (38) which is driven to rotate, the light beam deflector reflecting the light beam at a reflection surface (39), emitting the light beam through an emission face, and deflecting and scanning the light beam. An astigmatic difference correction surface (48) is structured at at least one of the light beam incidence face and emission face of the cubic prism. The astigmatic difference correction surface is set with an inclination angle and inclination direction that are suitable for correcting astigmatism which arises due to the light beam passing through the incidence face, being reflected at the reflection surface and passing through the emission face.

## Description

### BACKGROUND OF THE INVENTION

### 1 Field of the Invention

The present invention relates to an excellent light beam deflector, which is employed at an inner drum exposure apparatus (an inner face scanning-type light beam-scanning exposure apparatus) which scans a photosensitive surface disposed at an inner face of a cylindrical drum with a laser beam scanning optical system to perform exposure processing, or the like, and which corrects for astigmatism.

### 2 Description of the Related Art

For offset printing, photosensitive planographic printing plates (PS plates) are commonly employed. In the field of printing on these plates, CTP (computer-to-plate) systems have been realized which perform laser exposure processing based on digital data from a computer or the like, perform development processing for converting latent images formed on photosensitive planographic printing plates to visible images with an automatic developing machine, and produce direct printing plates.

3 In such CTP systems, inner drum exposure apparatuses (inner face scanning-type light beam-scanning exposure apparatuses), which guide a light beam of a laser or the like to a photosensitive surface of a photosensitive planographic printing plate which is a recording medium disposed on an inner peripheral face of a cylindrical drum to perform scanning-exposure processing, are widely used.

4 At such an inner drum exposure apparatus, a spinner mirror device is provided to serve as a light beam deflector (a monogon scanner). This spinner mirror device reflects condensed light from a light source side optical system at a spinner mirror, which is driven to rotate at high speed, to perform deflective scanning, in a main scanning direction, onto the photosensitive surface of the recording medium. Meanwhile, the spinner mirror device moves a spinner mirror section, by means of a sub-scanning movement component, in an axial direction of a circular center axis of a supporting body of the inner drum at a constant speed to perform sub-scanning. Thus, exposure processing is applied to the whole of the photosensitive surface of the recording medium.

5 For a conventional light beam deflector (monogon scanner), a spin motor module which is equipped with an astigmatic difference correction component, in order to compensate for deformation when an inclined mirror (the spinner mirror) is rotating at high speed, has been proposed. In this light beam deflector (monogon scanner), the inclined mirror is disposed inside a tubular casing of which one end is open and another end is closed. This inclined mirror is inclined at an angle of 45° with respect to a central axis of the tubular casing.

6 At such a light beam deflector, an incident light beam enters through this opening portion of the tubular casing and is reflected at the inclined mirror. The reflected light beam is emitted through a side opening portion, which is formed through a side face of the tubular casing, and is focused onto a recording medium.

7 This tubular casing is rotated at high speed (generally at least 10,000 rpm) for scanning the light beam. Thus, the inclined mirror is deformed by centrifugal force, and an aberration arises in the light beam.

8 Accordingly, an optically flat glass plate is disposed at the opening portion of the tubular casing such that adjustment of an angle thereof relative to the inclined mirror is possible. By adjusting a relative angle between the optically flat glass plate and the inclined mirror, an astigmatism correction which cancels the aberration is implemented (see, for example, U.S. Patent No. 5,768,001).

9 However, with an astigmatic difference correction component of a conventional light beam deflector that is structured thus, because of the structure in which the inclined mirror to be rotated at high speed is disposed inside the tubular casing and the optically flat glass plate is mounted at the opening portion of the tubular casing such that the angle thereof is adjustable, there are problems in that components are more numerous and more complex, and the light beam deflector is more expensive. Moreover, because weight of the light deflection section is heavier, there is a problem in that, given the same motor, there is a limitation on speeds of rotation at which it is possible to rotate.

### SUMMARY OF THE INVENTION

10 In light of the problem described above, an object of the present invention is to provide a new light beam deflector which realizes an astigmatic difference correction component with simple structure at a prism member including a reflective surface, for reflecting a condensed light beam in order to perform deflective scanning, and which can be fabricated at low cost.

11 A light beam deflector of the present invention is a light beam deflector at which a light beam modulated in accordance with image information passes through an incidence face of a cubic prism which is driven to rotate, the light beam deflector reflecting the light beam at a reflection surface, emitting the light beam through an emission face, and deflecting and scanning the light beam, for recording an image at a recording medium, in which light beam deflector at least one of the light beam incidence face and emission face of the cubic prism includes an astigmatic difference correction surface, which is specified with an inclination angle and inclination direction suitable for correcting astigmatism that arises due to the light beam passing through the incidence face, being reflected at the reflection surface and passing through the emission face.

12 According to the structure as described above, an inclined surface is integrally formed at the cubic prism, and the correction inclination angle and the inclination direction of the inclined surface compensate so as to reduce astigmatism that arises at the reflection surface. Thus, a light beam that has passed through the cubic prism is narrowly constricted and excellently focused to a beam spot. Thus, an image can be exposed with high precision without experiencing adverse effects from astigmatism, and it is possible to form a precise image and maintain stable image quality during recording exposure.

13 In the light beam deflector of the present invention, the astigmatic difference correction surface of the cubic prism may be formed so as to include an isosceles trapezoid shape in a sectional view cut along an axial direction of the rotation.

14 In the light beam deflector of the present invention, the astigmatic difference correction surface of the cubic prism may be formed so as to include a parallelogram shape in a plan view of directions orthogonal to an axis of the rotation.

15 In the light beam deflector of the present invention, the astigmatic difference correction surface may be formed at an incidence face portion of the cubic prism, with the astigmatic difference correction surface including an inclination in the form of a rotation about a sub-scanning direction of the reflection surface, the sub-scanning direction being a direction in which the reflection surface is inclined with respect to the incident light beam.

16 In the light beam deflector of the present invention, the astigmatic difference correction surface may be formed at an incidence face portion of the cubic prism, with the astigmatic difference correction surface including an inclination in the form of a rotation about a main scanning direction of the reflection surface, the main scanning direction being a direction in which the reflection surface is orthogonal with respect to the incident light beam.

17 According to the structures described above, the cubic prism can be formed with rotational symmetry about the axis of rotation. Hence, it is possible to suppress vibrations when the cubic prism is rotated at high speed.

18 According to the present invention, a light beam deflector is employed which realizes an astigmatic difference correction component with simple structure integrally with a prism member that includes a condensed light beam reflection surface for performing deflective scanning. As a result, there is an effect in that fabrication at low cost is possible.

### BRIEF DESCRIPTION OF THE DRAWINGS

Figure 1 is a perspective view showing the whole of a CTP (computer-to-plate) system at which an inner drum exposure apparatus is installed which includes a light beam deflector relating to an embodiment of the present invention.
Figure 2 is an overall schematic structural view of an interior portion of the CTP system at which the inner drum exposure apparatus including the light beam deflector relating to the embodiment of the present invention is installed.
Figure 3 is a perspective view of a principal portion, showing, in an extracted state, a cubic prism portion which is employed at the light beam deflector relating to the embodiment of the present invention.
Figure 4A is a plan view showing, in an extracted state, a cubic prism portion with a trapezoid shape in sectional view, which is employed at the light beam deflector relating to the embodiment of the present invention.
**Figure 4B** is a sectional view showing, in the extracted state, the cubic prism portion with the trapezoid shape in sectional view, which is employed at the light beam deflector relating to the embodiment of the present invention.
Figure 5A is a plan view showing, in an extracted state, a cubic prism portion with a trapezoid shape in side view, which is employed at the light beam deflector relating to the embodiment of the present invention.
Figure 5B is a side view showing, in the extracted state, the cubic prism portion with the trapezoid shape in side view, which is employed at the light beam deflector relating to the embodiment of the present invention.
Figures 6A to 6C are explanatory views for explaining a principle of a concrete example of an astigmatic difference correction component of the present invention.
Figure 7A is a plan view showing, in an extracted state, a cubic prism portion with a parallelogram shape in plan view, which is employed at the light beam deflector relating to the embodiment of the present invention.
Figure 7B is a side view showing, in the extracted state, the cubic prism portion with the parallelogram shape in plan view, which is employed at the light beam deflector relating to the embodiment of the present invention.
Figure 8A is a plan view showing, in an extracted state, a cubic prism portion with a trapezoid shape in side view, which is employed at the light beam deflector relating to the embodiment of the present invention.
Figure 8B is a front view showing, in the extracted state, the cubic prism portion with the trapezoid shape in side view, which is employed at the light beam deflector relating to the embodiment of the present invention.
Figure 8C is a side view showing, in the extracted state, the cubic prism portion with the trapezoid shape in side view, which is employed at the light beam deflector relating to the embodiment of the present invention.
Figure 8D is a perspective view showing, in the extracted state, the cubic prism portion with the trapezoid shape in side view, which is employed at the light beam deflector relating to the embodiment of the present invention.
Figures 9A to 9C are explanatory views for explaining a principle of another concrete example of the astigmatism correction component of the present invention.
Figure 10 is an explanatory view showing an example of a state in which an astigmatic difference arises at a reflective surface of a cubic prism that is employed at the light beam deflector relating to the embodiment of the present invention.
Figure 11A is an explanatory view for explaining a principle of correcting an astigmatic difference with the cubic prism shown in Figures 4A and 4B, which is employed at the light beam deflector relating to the embodiment of the present invention, showing a state with a cubic prism which is not provided with an astigmatic difference correction surface.
Figure 11B is an explanatory view for explaining the principle of correcting an astigmatic difference with the cubic prism shown in Figures 4A and 4B, which is employed at the light beam deflector relating to the embodiment of the present invention, showing a state in which the astigmatic difference is corrected.
Figure 12A is an explanatory view for explaining a principle of correcting an astigmatic difference with the cubic prism shown in Figures 8A to 8D, which is employed at the light beam deflector relating to the embodiment of the present invention, showing a state with a cubic prism which is not provided with an astigmatic difference correction surface.
Figure 12B is an explanatory view for explaining the principle of correcting an astigmatic difference with the cubic prism shown in Figures 8A to 8D, which is employed at the light beam deflector relating to the embodiment of the present invention, showing a state in which an astigmatic difference is corrected.
Figure 13A is an explanatory view for explaining a principle of correcting an astigmatic difference with a cubic prism employed at the light beam deflector relating to the embodiment of the present invention, showing a state in which an astigmatic difference correction component is not provided.
Figure 13B is an explanatory view for explaining the principle of correcting an astigmatic difference with a cubic prism employed at the light beam deflector relating to the embodiment of the present invention, showing a state in which the astigmatic difference is corrected by a theoretical prism member, which is disposed such that an emission face thereof is inclined with respect to an optical axis of incident light and an incidence face thereof is orthogonal to the optical axis of the incident light.
Figure 14A is an explanatory view for explaining a principle of correcting an astigmatic difference with a cubic prism employed at the light beam deflector relating to the embodiment of the present invention, showing a state in which an astigmatic difference correction component is not provided.
Figure 14B is an explanatory view for explaining the principle of correcting an astigmatic difference with a cubic prism employed at the light beam deflector relating to the embodiment of the present invention, showing a state in which the astigmatic difference is corrected by a theoretical prism member, which is disposed such that an incidence face thereof is inclined with respect to an optical axis of incident light and an emission face thereof is orthogonal to the optical axis of the incident light.

### DETAILED DESCRIPTION OF THE INVENTION

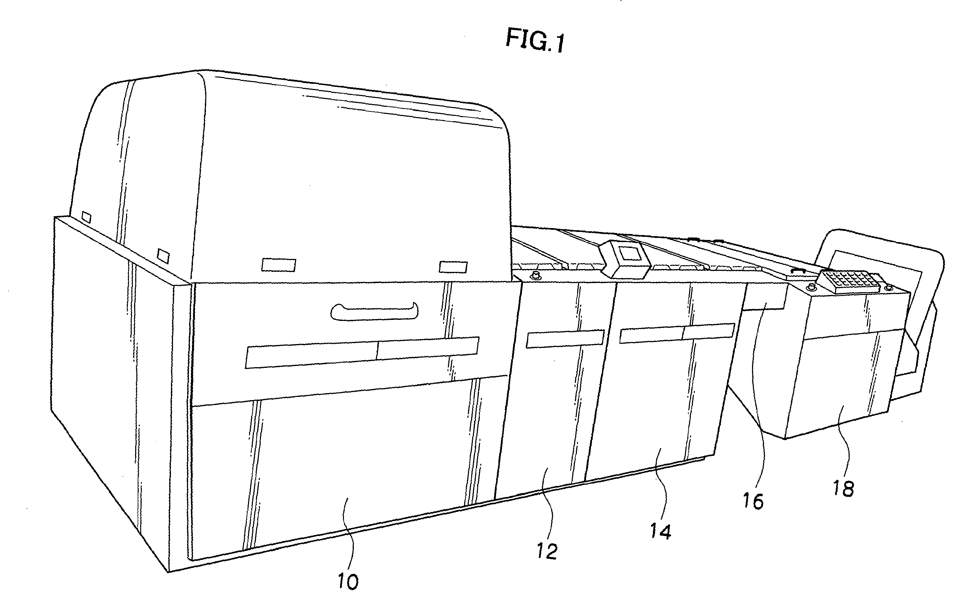

19 An embodiment relating to a light beam deflector of the present invention is described with Figures 1 to 10. The light beam deflector relating to the present embodiment is suitable for employment in a CTP (computer-to-plate) system in which a photosensitive planographic printing plate (PS plate) for offset printing serves as a recording medium, laser exposure processing is performed on the basis of digital data from a computer or the like, development processing at an automatic developer converts a latent image formed on the photosensitive planographic printing plate to a visible image, and a direct printing plate is produced.

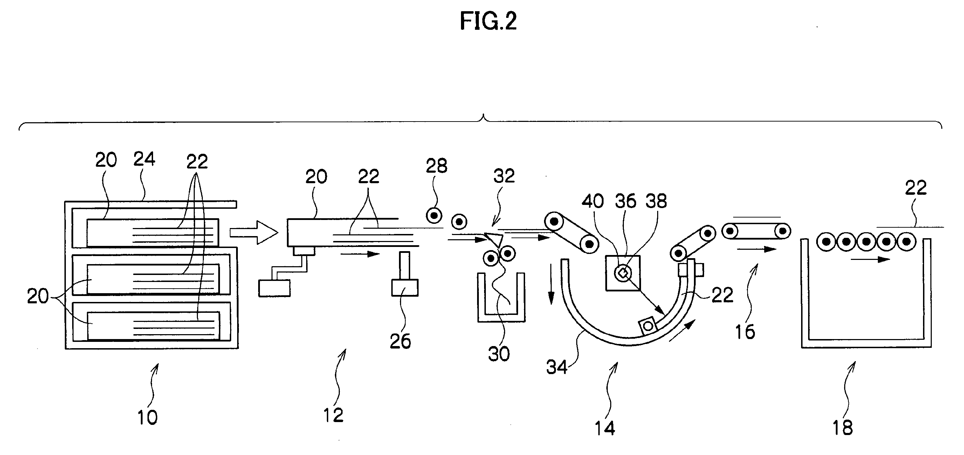

20 Figures 1 and 2 show, in relation to the present embodiment, general structure of a CTP (computer-to-plate) system which is equipped with an inner drum exposure apparatus including a light beam deflector which realizes an astigmatic difference correction component.

21 This CTP system is equipped with an automatic feeding apparatus 10 with printing plate supply cassettes 20, a sheet supply apparatus 12, an inner drum exposure apparatus (a monogon scanner) 14, a buffer apparatus 16, and a development and processing apparatus 18. The sheet supply apparatus 12 separates and supplies PS plates 22 one by one. The PS plates 22 are photosensitive planographic printing plate in the printing plate supply cassettes 20.

22 In this CTP system, as the recording medium which is an object of exposure processing, it is possible to use, for example, a PS plate at which an image-recording layer including a photosensitive material is formed on a support which is a thin aluminous plate, or a photopolymer plate, a silver salt-type photosensitive material or the like.

23

The automatic feeding apparatus 10 of this CTP system stores a plurality of the printing plate supply cassettes 20, which are installed from outside by an operator, on respective storage shelves 24, and feeds a required printing plate supply cassette 20 to the sheet supply apparatus 12.

24 The sheet supply apparatus 12 opens up a lid of the printing plate supply cassette 20 that has been fed thereto, lifts up a sheaf of the PS plates 22 that are accommodated in the printing plate supply cassette 20 with a lifting mechanism 26, separates out the PS plates 22 one at a time with a separation roller 28, and supplies each PS plate 22 to the inner drum exposure apparatus 14. At this sheet supply apparatus 12, an interleaf removal section 32 is provided for separating interleaf sheets 30, which are superposingly sandwiched between the PS plates 22 for protecting photosensitive surfaces thereof, and storing the interleaf sheets 30.

25 The inner drum exposure apparatus 14 of this CTP system is structured with a support body 34 as a principal body thereof. The support body 34 has a circular arc-form inner peripheral face (i.e., a shape constituting a portion of an inner peripheral face of a circular tube). The PS plate 22 is supported along the inner peripheral face of this support body 34.

26 At this inner drum exposure apparatus 14, the PS plate 22, which is an unrecorded recording medium, is retained, by a vacuum suction component, in a state which is assuredly closely adhered to and lying along the inner peripheral face of the support body 34. Thereafter, exposure processing is performed.

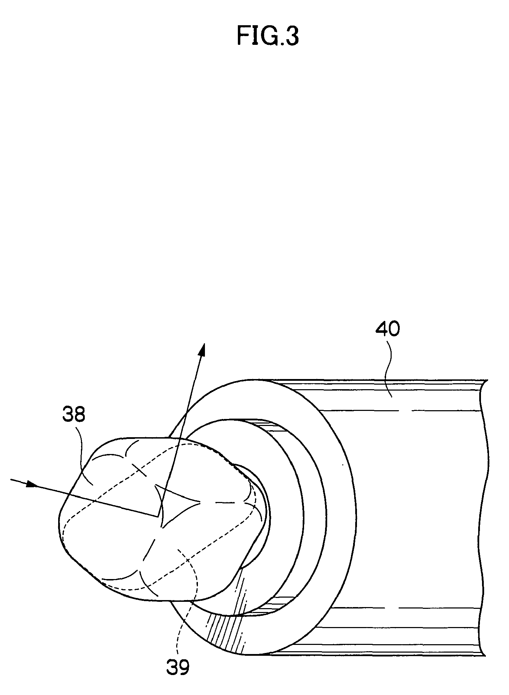

27 At the inner drum exposure apparatus 14, a spinner mirror device 36 is disposed at a center position of the circular arc of the support body 34 to serve as a light beam deflector. This spinner mirror device 36 constitutes a reflection mirror member (spinner mirror) as shown in Figure 3. A cubic prism 38 of the spinner mirror device 36 (here, a ball prism manufactured by WESTWIND AIR BEARINGS could be used) is disposed at a tip face of a rotation shaft 40. The rotation shaft 40 is structured to be rotatable at a high speed (for example, 10,000 rpm or more) by a motor which serves as a drive source, rotation of which is controlled by a spinner driver of a control device. As shown in Figure 2, the spinner mirror device 36 is structured such that a central axis of rotation of the rotation shaft 40 coincides with a center axis of the circular arc of the support body 34.

28 At the spinner mirror device 36, a light beam which is projected from a light source side optical system is reflected at a reflection mirror surface of the rotating cubic prism 38 and performs scanning exposure, in a main scanning direction, onto the photosensitive surface of the PS plate 22.

29 The spinner mirror device 36 sub-scans by being controlled to move at a constant speed in the axial direction of the center axis of the circular arc of the support body 34 (a direction through the paper of Figure 2 from a front face to a rear face) by a sub-scanning movement component.

30 In order to do this, the spinner driver of the control device performs control of movement by the sub-scanning movement component of the spinner mirror device 36 in the sub-scanning direction, together with control of rotation of the motor.

31 The spinner mirror device 36 which is structured thus reflects the light beam, which is projected from the light source side optical system and modulated in accordance with image information, at the reflection mirror surface of the rotating cubic prism 38, and performs scanning-exposure in the main scanning direction while the spinner mirror device 36 moves in the sub-scanning direction. Thus, processing to record an image in two dimensions is carried out over the whole of a recording surface of the PS plate 22.

32 The buffer apparatus 16 provided at the CTP system features a function for transporting the PS plate 22 that has been exposure-processed at the inner drum exposure apparatus 14 to the development and processing apparatus 18 with a required timing, by adjustment of a conveyance speed.

33 The development and processing apparatus 18 performs development processing on the exposed PS plate 22 that has been transported thereto, converting a latent image to a visible image and producing a printing plate.

34 Now, a component which performs correction of an astigmatic difference at the spinner mirror device 36, which reflects the condensed light beam at a reflection surface 39 of the cubic prism 38 to perform deflective scanning, will be described.

35 With regard to the component that performs correction of an astigmatic difference at the cubic prism 38, when converging light passes through a prism with non-parallel faces, if an incident face is inclined with respect to an optical axis of the incident light, a convergence position of the light for a direction of the inclination of the incidence face shifts in a direction away from the prism relative to a convergence position for a direction orthogonal to the direction of inclination. In contrast, if an emission face is inclined relative to the optical axis of the incident light, a convergence position of the light for the inclination direction shifts in a direction to approach the prism relative to a convergence position for the orthogonal direction. In order to provide the cubic prism 38 with the functionality of an astigmatism correction member featuring such a characteristic, the cubic prism 38 is structured with an astigmatism correction member integrated thereat.

36 With the cubic prism 38 of the spinner mirror device 36 being an internal reflection surface prism-type, there are: first, cases in which, in a light beam that is incident through the incidence face, reflected at the reflection surface and emitted through the emission face, astigmatism arises because of strains during machining and production of the cubic prism 38, fabrication errors and the like; second, cases in which, when the cubic prism 38 has been fixed to the rotation shaft 40 by adhesion or a mechanical fixing structure or the like, astigmatism arises in the light beam that is incident through the incidence face of the cubic prism 38, reflected at the reflection surface and emitted through the emission face; and third, cases in which astigmatism arises in the light beam that is incident through the incidence face of the cubic prism 38, reflected at the reflection surface and emitted through the emission face because of an effect of centrifugal force when the cubic prism 38 is rotating at high speed. Herein, a reflection angle of the reflection surface 39 of the cubic prism 38 may be an angle which is inclined relative to the rotation axis by 45°, or another angle.

37 Accordingly, the cubic prism 38 is structured such that a component which corrects an astigmatic difference arising due to at least one among these causes is realized at a time of fabrication of the cubic prism 38.

38 In order to do this, respective astigmatism amounts caused by the above-described first, second and third causes are calculated in advance by an astigmatism amount detection component, with optical measurements, dynamic simulations or the like. Here, an astigmatic difference which arises when the cubic prism 38 is fixed to the rotation shaft 40, which is the second cause, is generally a very minor problem. Therefore, it is desirable to structure the cubic prism 38 to be capable of correcting an astigmatism amount that arises due to one or both of the first and third causes. Further, the cubic prism 38 may be structured to be capable of compensating for astigmatism amounts which arise in combination due to a concurrence of the first, second and third causes.

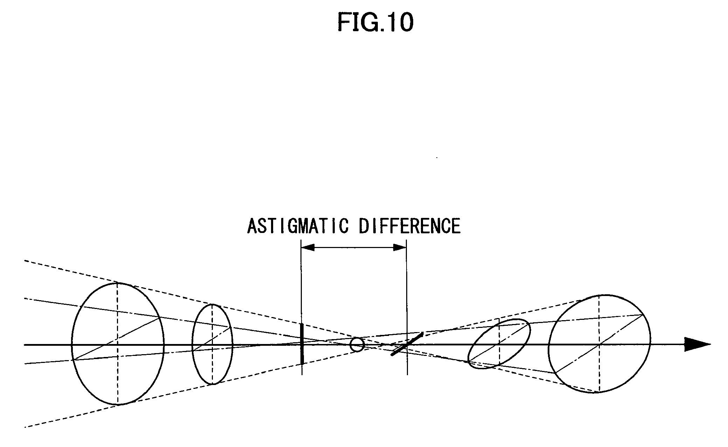

39 As an example, an astigmatic difference which is caused by astigmatism is schematically shown in Figure 10. In a case in which an astigmatic difference which is caused by the first cause, in machining or the like, is around 100 µm, a respective astigmatism difference amount which arises in operation because of the third cause is approximately 400 µm, and a focusing depth in a situation in which a beam spot on the photosensitive surface of the PS plate 22 is tightly focused for exposure processing is around 200 µm, only a portion of the converging light beam meets at a focusing point, while another portion of the light beam does not meet at the focusing point. Consequently, an image which is formed by exposure is blurred and image quality is lowered. Therefore, it is necessary to correct this.

40 At the component for correcting astigmatic differences which is realized at the cubic prism 38, an astigmatism correction surface featuring an inclination angle and an inclination direction corresponding to an amount and direction of astigmatism arising due to the first, second and/or third causes, which are calculated beforehand, to correct the astigmatism is structured at at least one (possibly both herein) of the incidence face and the emission face of the cubic prism 38.

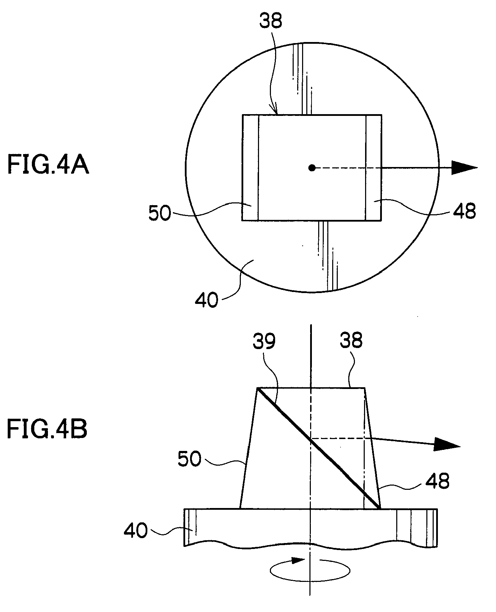

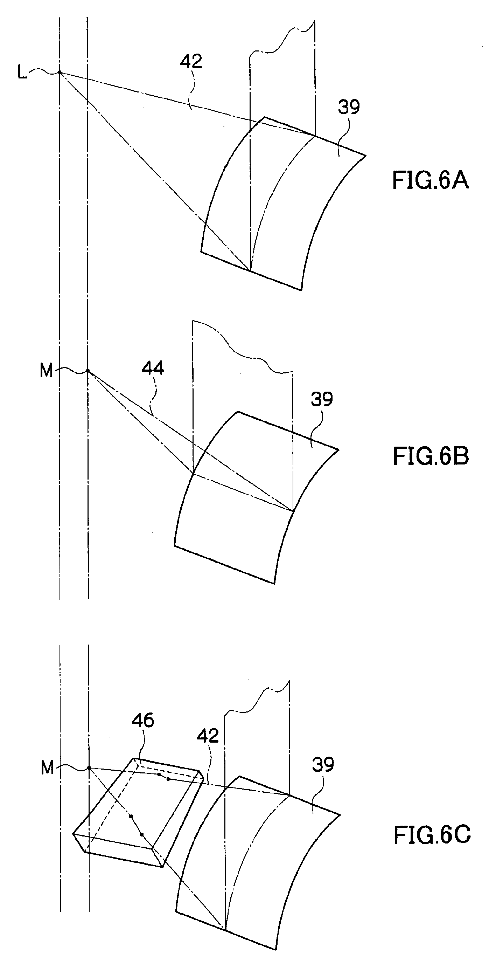

41 Now, in order to illustrate concrete examples of the component for correcting astigmatic differences which is realized at the cubic prism 38, the structures of Figures 4A and 4B, Figures 6A to 6C and Figures 8A to 8D, of cases in which a deformation arises which acts as an upward protrusion of the reflection surface 39 of the cubic prism 38, will be examined. As shown in Figure 6A, when a slit-form theoretical light beam 42 is considered, which is incident along the sub-scanning direction of the reflection surface 39 (a direction in which the reflection surface 39 is inclined with respect to the incident beam), this slit-form theoretical light beam 42 is reflected by a mirror with a protruding surface and converges at a convergence point position L (a focusing position for the sub-scanning direction) which is relatively further.

42 Here, as shown in Figure 6B, when a slit-form theoretical light beam 44 is considered, which is incident along the main scanning direction of the reflection surface 39 (a direction in which the reflection surface 39 is perpendicular with respect to the incident beam), this slit-form theoretical light beam 44 is reflected by a mirror with a flat surface and converges at a convergence point position M (a focusing position in the main scanning direction) which is relatively closer.

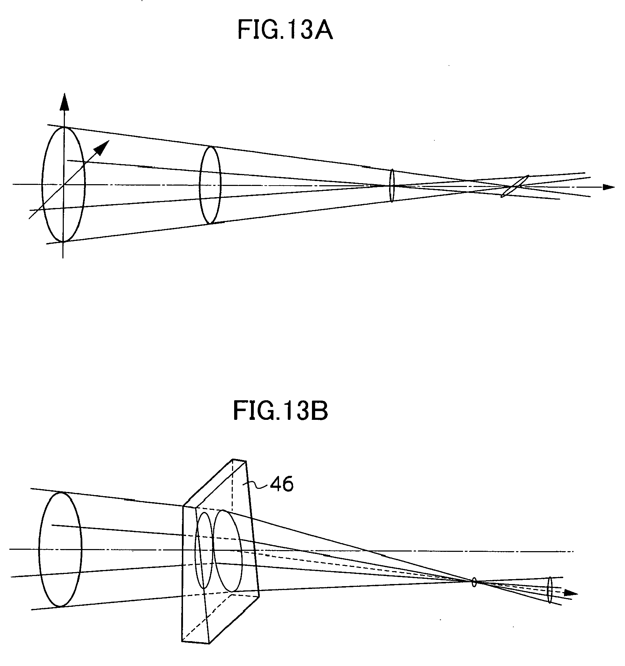

43 In such a case, if, as shown in Figures 6C and 13B, a theoretical prism member 46 is disposed on the optical path of the theoretical light beam 42, which acts as slit-form converging light which is incident and reflected along the sub-scanning direction of the reflection surface 39 (the direction in which the reflection surface 39 is inclined with respect to the incident beam), such that the theoretical prism member 46 has a correction inclination angle which is appropriate for causing the relatively further convergence point position L (the sub-scanning direction focusing position) of the theoretical light beam 42 to approach and coincide with the relatively closer convergence point position M (the main scanning direction focusing position) of the theoretical light beam 44, and the inclination direction of the theoretical prism member 46 is made to match the sub-scanning direction of the reflection surface 39 (the direction in which the reflection surface 39 is inclined with respect to the incident beam), with an emission face being inclined relative to the optical axis of the incident light and an incidence face being orthogonal to the optical axis of the incident light, then the astigmatic difference shown in Figure 13A can be corrected as shown in Figure 13B.

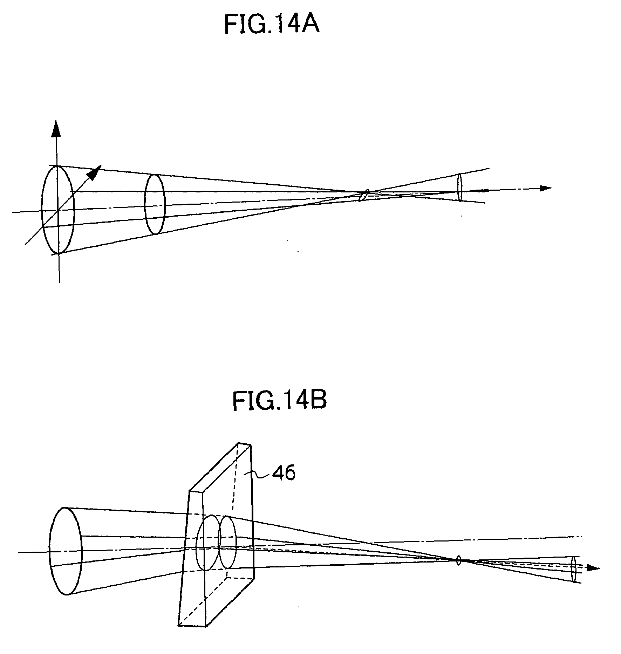

44 Also, in theory, if, as is shown in Figures 14A and 14B, the theoretical prism member 46 is disposed on the optical path of the slit-form theoretical light beam 44, which is incident and reflected along the main scanning direction of the reflection surface 39 (the direction in which the reflection surface 39 is orthogonal to the incident beam), such that the theoretical prism member 46 has a correction inclination angle which is appropriate for causing the comparatively closer convergence point position M of the theoretical light beam 44 to approach and coincide with the comparatively further convergence point position L of the theoretical light beam 42, and the inclination direction of the theoretical prism member 46 is made to match the main scanning direction of the reflection surface 39 (the direction in which the reflection surface 39 is perpendicular with respect to the incident beam, that is, a direction of an inclination in the form of a rotation about the sub-scanning direction), with the incidence face being inclined relative to the optical axis of the incident light and the emission face being orthogonal to the optical axis of the incident light, then the astigmatic difference shown in Figure 14A can be corrected as shown in Figure 14B.

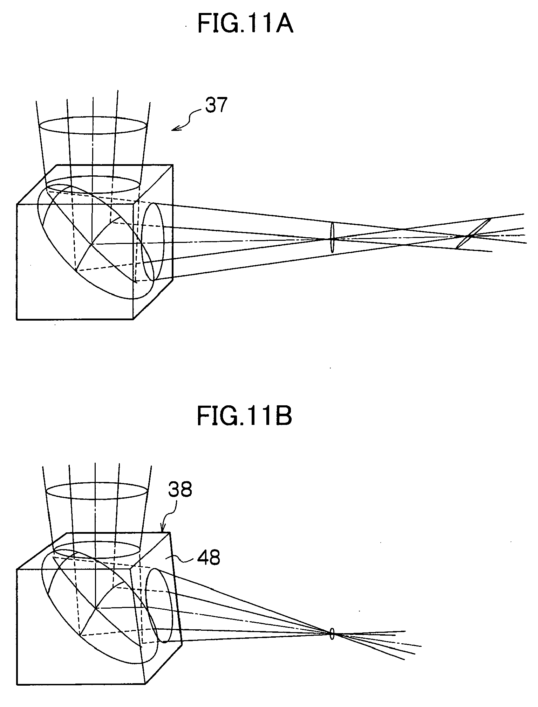

45 Accordingly, as shown in Figures 4A and 4B, an astigmatic difference correction surface 48 is formed at an emission face portion of the cubic prism 38. The astigmatic difference correction surface 48 is an inclined face which features a correction inclination angle suitable for enabling precise cancellation of an astigmatic difference by causing the convergence point position L which is relatively further from the cubic prism 38 (the sub-scanning direction focusing position) to move closer and coincide with the relatively closer convergence point position M (the main scanning direction focusing position). The astigmatic difference correction surface 48 is inclined along the sub-scanning direction of the reflection surface 39 (the direction in which the reflection surface 39 is inclined with respect to the incident beam). (That is, the astigmatic difference correction surface 48 is an inclined face which is inclined in the form of a rotation about the main scanning direction.) Here, in this case, the incidence face of the cubic prism 38 is structured so as to be orthogonal to the optical axis of the incident light. With such a structure, rather than an astigmatic difference which would occur at a cubic prism 37 which is not provided with the astigmatic difference correction surface 48, as shown in Figure 11A, the astigmatic difference can be corrected as shown in Figure 11B.

46 Further, with the cubic prism 38 shown in Figures 4A and 4B, it is desirable to form the cubic prism 38 in a shape with rotational symmetry about the rotation axis, in order to make a center of gravity of the cubic prism coincide with the rotation axis, such that excess force will not be applied to the prism and axle oscillations of the rotation axis are prevented. Accordingly, at the cubic prism 38, an inclined auxiliary surface 50 is formed with the same shape as the astigmatic difference correction surface 48 at a face which is opposite from the astigmatic difference correction surface 48, and the cubic prism 38 as a whole is formed in an isosceles trapezoid shape, in a sectional view cut along the rotation axis.

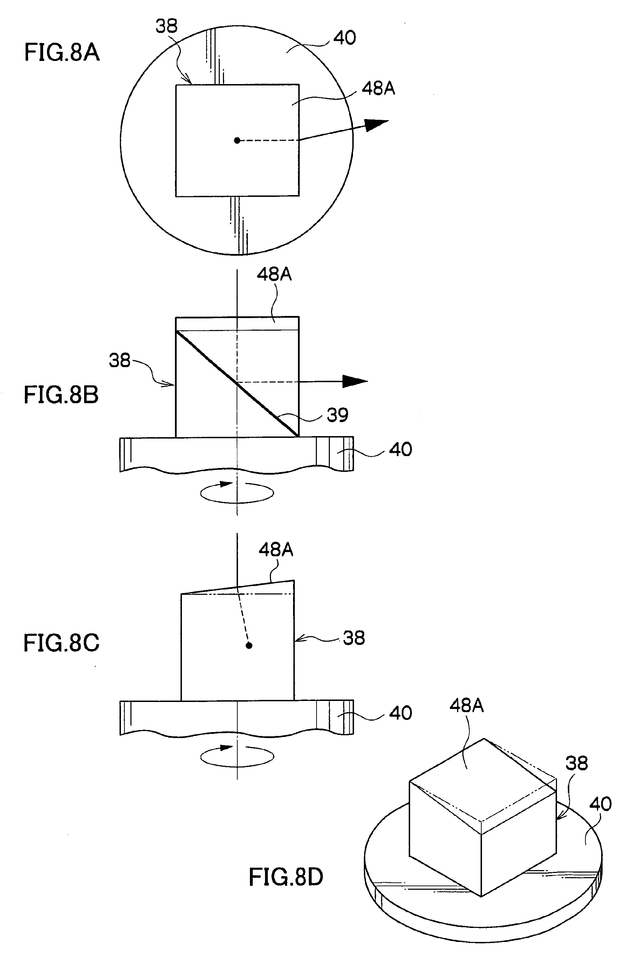

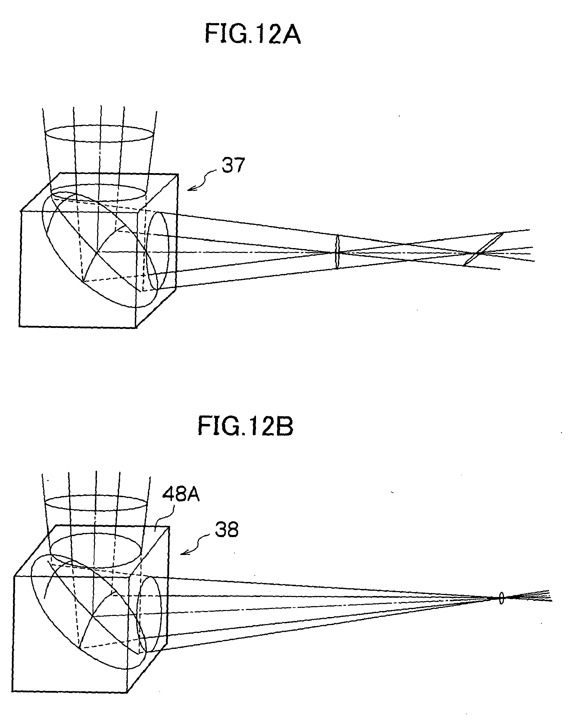

47 Further, as shown in Figures 8A to 8D, a structure is also possible in which an astigmatic difference correction surface 48A is formed at an incidence face portion of the cubic prism 38. The astigmatic difference correction surface 48A is an inclined face which is inclined along the main scanning direction of the reflection surface 39 (the direction in which the reflection surface 39 is orthogonal to the incident beam), with a correction inclination angle that is suitable for causing the relatively closer convergence point position M (the main scanning direction focusing position) to move away and precisely coincide with the relatively further convergence point position L (the sub-scanning direction focusing position). With such a structure, rather than an astigmatic difference which would occur at a cubic prism 37 which is not provided with the astigmatic difference correction surface 48A, as shown in Figure 12A, the astigmatic difference can be corrected as shown in Figure 12B.

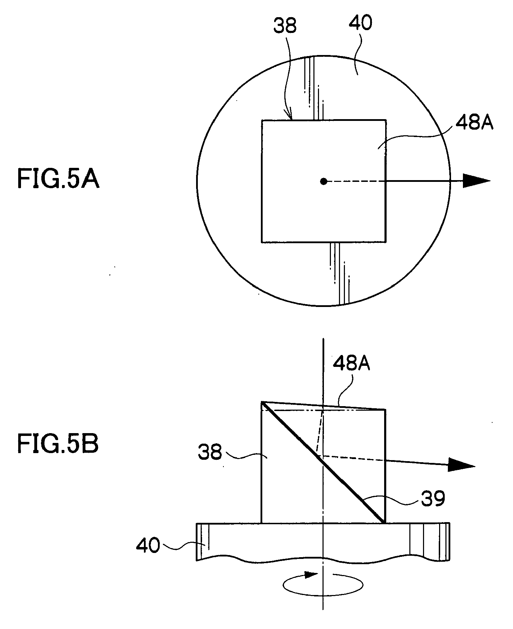

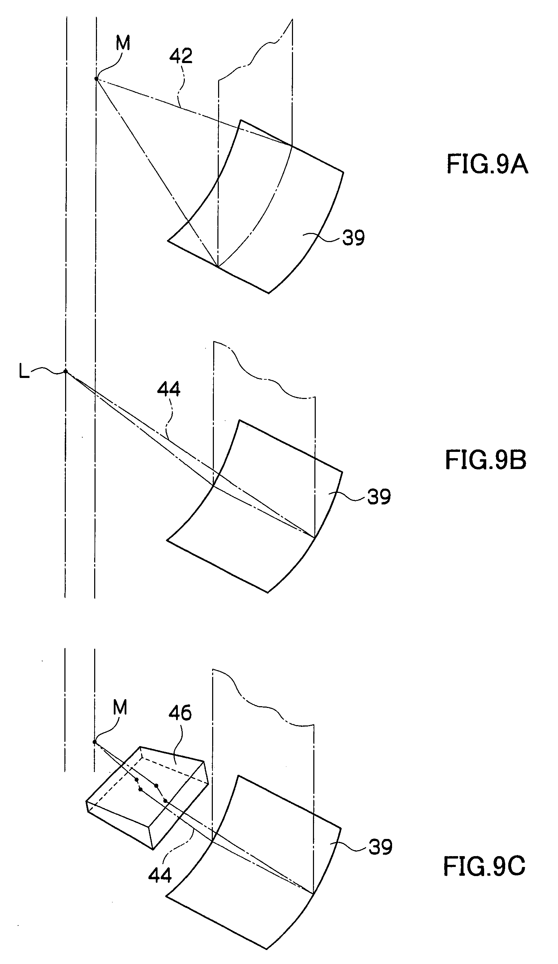

48 Next, in order to illustrate other concrete examples of the component for correcting astigmatic differences which is realized at the cubic prism 38, the structures of Figures 5A and 5B, Figures 7A and 7B and Figures 9A to 9C, of cases in which a deformation arises which acts as a concave face (recessed downward) of the reflection surface 39 of the cubic prism 38, will be examined. As shown in Figure 9A, when the slit-form theoretical light beam 42 is considered, which is incident along the sub-scanning direction of the reflection surface 39 (the direction in which the reflection surface 39 is inclined with respect to the incident beam), this slit-form theoretical light beam 42 is reflected by a mirror with a recessed surface and converges at a convergence point position M (a main scanning direction focusing position) which is relatively closer.

49 Here, as shown in Figure 9B, when the slit-form theoretical light beam 44 is considered, which is incident along the main scanning direction of the reflection surface 39 (the direction in which the reflection surface 39 is perpendicular with respect to the incident beam), this slit-form theoretical light beam 44 is reflected by a mirror with a flat surface and converges at a convergence point position L (a sub-scanning direction focusing position) which is relatively further.

50 In such a case, if, as shown in Figure 9C, the theoretical prism member 46 is disposed on the optical path of the slit-form theoretical light beam 44, which acts as slit-form converging light which is incident and reflected along the main scanning direction of the reflection surface 39 (the direction in which the reflection surface 39 is orthogonal to the incident beam), in a state in which the theoretical prism member 46 has a correction inclination angle which is appropriate for causing a focusing position to move closer, from the relatively further convergence point position L (the sub-scanning direction focusing position) toward the relatively closer convergence point position M (the main scanning direction focusing position), and precisely coincide therewith, and the inclination direction of the theoretical prism member 46 is made to match the main scanning direction of the reflection surface 39 (the direction in which the reflection surface 39 is orthogonal to the incident beam), with the emission face being inclined relative to the optical axis of the incident light and the incidence face being orthogonal to the optical axis of the incident light, then the astigmatic difference can be corrected. 51 Also, if the theoretical prism member 46 is disposed on the optical path of the slit-form theoretical light beam 42, which is incident along the sub-scanning direction of the reflection surface 39 (the direction in which the reflection surface 39 is inclined relative to the incident beam), such that the theoretical prism member 46 has a correction inclination angle which is appropriate for causing the comparatively closer convergence point position M (the main scanning direction focusing position) of the theoretical light beam 42 to move away and coincide with the comparatively further convergence point position L (the sub-scanning direction focusing position) of the theoretical light beam 44, and the inclination direction of the theoretical prism member 46 is made to match the main scanning direction of the reflection surface 39 (the direction in which the reflection surface 39 is orthogonal to the incident beam), with the incidence face being inclined relative to the optical axis of the incident light, then the astigmatic difference can be corrected.

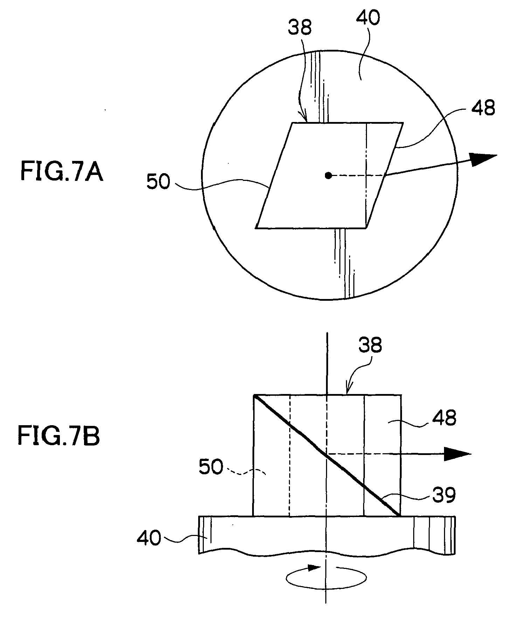

52 Accordingly, as shown in Figures 7A and 7B, the astigmatic difference correction surface 48 is formed at an emission face portion of the cubic prism 38. The astigmatic difference correction surface 48 is an inclined face which features a correction inclination angle suitable for causing the relatively further convergence point position L (the sub-scanning direction focusing position) to move closer and precisely coincide with the relatively closer convergence point position M (the main scanning direction focusing position), and is inclined along the main scanning direction of the reflection surface 39 (the direction in which the reflection surface 39 is orthogonal to the incident beam).

53 Further, with the cubic prism 38 shown in Figures 7A and 7B, it is desirable to form the cubic prism 38 in a shape with rotational symmetry about the rotation axis. Accordingly, at the cubic prism 38, the inclined auxiliary surface 50 is formed with the same shape as the astigmatic difference correction surface 48 at a face which is opposite from the astigmatic difference correction surface 48, and the cubic prism 38 as a whole is formed in a parallelogram shape (a rhomboid shape) in plan view.

54 Further, as shown in Figures 5A and 5B, a structure is also possible in which the astigmatic difference correction surface 48A is formed at an incidence face portion of the cubic prism 38. The astigmatic difference correction surface 48A is an inclined face which is inclined along the sub-scanning direction of the reflection surface 39 (the direction in which the reflection surface 39 is inclined relative to the incident beam), with a correction inclination angle that is suitable for causing a focusing position to move away, from the relatively closer convergence point position M toward the relatively further convergence point position L, and precisely coincide therewith.

55 Now, at the reflection surface 39 of the cubic prism 38 in practice, rather than just the cases in which simple deformations occur as illustrated in the above-mentioned Figures 4A to 9C, a variety of deformations are possible. Therefore, the correction inclination angle of the astigmatic difference correction surface 48 and an inclination direction of the inclined surface will be specified in correspondence with various conditions of the reflection surface 39 such that astigmatism is minimized.

56 That is, at the cubic prism 38, there are variations even in astigmatism which is caused by machining errors, rotation and the like. Accordingly, at such an astigmatic difference correction component, an astigmatic difference correction amount is set to a midpoint of variations in astigmatic difference. Hence, it will be possible to keep image quality stable during exposure-recording.

57 Further, at the cubic prism 38, a direction in which astigmatism is caused by the reflection surface 39 is not necessarily limited to the main scanning direction or the sub-scanning direction. Therefore, the shape of the astigmatic difference correction surface 48 provided at the incidence face or emission face is set to be inclined relative to the center of the converging beam in correspondence with a direction in which astigmatism arises. Further yet, it is possible to structure the astigmatic difference correction surface 48 at both the incidence face and the emission face of the cubic prism 38. In such a case, it is possible to, for example, structure the two astigmatic difference correction surfaces 48 with respectively different inclination directions (for example, a state of being inclined at 45° to one another), so as to simultaneously correct astigmatic differences in two directions.

58 In a case of exposure processing with the spinner mirror device 36 employing the cubic prism 38 at which the component for correcting an astigmatic difference is integrally structured as described above, even if a beam spot on the photosensitive surface of the PS plate 22 is to be narrowly constricted and the focusing depth for exposure processing is to be short, substantially the whole of the light beam is excellently focused at the beam spot, and an image is exposed with high precision without suffering adverse effects from astigmatic differences. Thus, it is possible to form precise images and improve image quality.

## Claims

1. A light beam deflector, at which a light beam modulated in accordance with image information passes through an incidence face of a cubic prism which is driven to rotate, the light beam deflector reflecting the light beam at a reflection surface, emitting the light beam through an emission face, and deflecting and scanning the light beam, for recording an image at a recording medium, wherein
at least one of the light beam incidence face and emission face of the cubic prism includes an astigmatic difference correction surface, which is specified with an inclination angle and inclination direction suitable for correcting astigmatism that arises due to the light beam passing through the incidence face, being reflected at the reflection surface and passing through the emission face.

2. The light beam deflector of claim 1, wherein the astigmatic difference correction surface of the cubic prism is formed so as to include an isosceles trapezoid shape in a sectional view cut along an axial direction of the rotation.

3. The light beam deflector of claim 1, wherein the astigmatic difference correction surface of the cubic prism is formed so as to include a parallelogram shape in a plan view of directions orthogonal to an axis of the rotation.

4. The light beam deflector of claim 1, wherein the astigmatic difference correction surface is formed at an incidence face portion of the cubic prism, the astigmatic difference correction surface including an inclination in the form of a rotation about a sub-scanning direction of the reflection surface, the sub-scanning direction being a direction in which the reflection surface is inclined with respect to the incident light beam.

5. The light beam deflector of claim 1, wherein the astigmatic difference correction surface is formed at an incidence face portion of the cubic prism, the astigmatic difference correction surface including an inclination in the form of a rotation about a main scanning direction of the reflection surface, the main scanning direction being a direction in which the reflection surface is orthogonal with respect to the light beam.
